(19)

**Europäisches Patentamt**
**European Patent Office**
**Office européen des brevets**

(11) **EP 3 702 980 A1**

(12) **EUROPEAN PATENT APPLICATION**

(43) Date of publication:
**02.09.2020  Bulletin 2020/36**

(51) Int Cl.:
**G06Q 10/04** *(2012.01)*    **G06Q 50/30** *(2012.01)*

(21) Application number: **19159969.5**

(22) Date of filing: **28.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Tian, Jilei**
  **Chicago, IL Illinois 60605 (US)**
• **Cao, Yang**
  **Chicago, IL Illinois 60601 (US)**

(54) **METHOD FOR ROUTE PLAN OPTIMIZATION TAKING CONSTRAINT AND EVENT INTO ACCOUNT**

(57)    Provided a computer-implemented method for determining a route plan, the method comprising: receiving locations data, the locations data identifying a plurality of geographical locations (A, B, C, D); receiving and/or determining paths data, the paths data identifying a plurality of paths ($V_{A,B,1}$, $V_{A,B,2}$, $V_{B,C,1}$, $V_{B,C,2}$, $V_{C,D,1}$) between the geographical locations (A, B, C, D); receiving event data, the event data identifying at least one event (E1, E2, E3) associated with at least one of the paths, each event having an event time window and an event score; determining the route plan by selecting paths from the path data as selected paths and by selecting a selected paths order specifying the order in which the selected paths are followed. It is an object to provide improved safety and efficiency to transportation. The object is solved by the step of determining the route plan including solving an optimization objective with linear constraints; and wherein the optimization objective and/or the linear constraints include at least one event time window and/or at least one event score.

Fig. 1

EP 3 702 980 A1

**Description**

The invention relates to a method for determining optimal route to visit locations while taking route dynamics and predictive event into account.

The state-of-the-art technologies for route planning focus on minimizing the distance or travel time, so-called the shortest or fastest route optimization. Traffic events, e.g. traffic jams, are either addressed as part of impacted estimated time of arrival (ETA), or send the push notification for user to take care.

The prior art does not offer optimal user experiences as the journey solution, in particular where several locations are visited during a planned driving route. The known route planning does not consider complex event, e.g. several temporal and spatial events. The invention partly lies in the realization that the traditional approach to route optimization does not provide efficient optimal solution to deal with complex events and user requirements. The invention also lies in the formulating of an optimization problem to allow the route planning to be improved. The invention also includes solution to the optimization problem.

In particular, the optimization problem is solved by the subject-matter of claim 1, claim 13, and claim 14.

In particular, the object of the present invention is solved by a computer-implemented method for determining a route plan, the method comprising:

   receiving locations data, the locations identifying a plurality of geographical locations;
   receiving and/or determining paths data, the paths data identifying a plurality of paths between the geographical locations;
   receiving event data, the event data identifying at least one event associated with at least one of the paths, each event having an event time window and an event score;
   determining the route plan by selecting paths from the path data as selected paths and by selecting a selected paths order specifying the order in which the selected paths are followed;
   characterized in that
   the step of determining the route plan includes solving an optimization objective with linear constraints; and
   wherein the optimization objective and/or the linear constraints include at least one event time window and/or at least one event score.

Events can extend to requirements, e.g. service time from user, or that the user has to be at a given location during the expected time.

The invention involves realizing that future events having a predicted time window and a predicted score and associated with paths between locations to visit may be used to improve the route plan between the locations. The advantage of the invention includes a route plan allowing energy efficient and more secure transportation.

The invention can be used for any application task or domain, that have temporal-spatial local constraint, such as the event for the given time period and for a road segment, such as geo-fence. As an example the invention may be applied to ride-sharing to find optimal solution to pick up a user at the user's request for a given time period and location.

The invention is further an enabler for effective support of smart traffic management, e.g. express lane that shares the same road, but in which route direction may change over time. As part of digital transformation or smart city, local administrative may use the invention to flexibly "apply and adjust" the traffic rules. The invention can be generally extend as an enabler applied in a platform that can be used broadly.

Recent technologies allow micro-weather that can predict the weather with high geographical resolution (for a given road segment or even person location in the street) and high temporal resolution (minute for minute). Based on high resolution weather forecast, route planning with increased precision can be generated.

The event time window as described herein may be a closed window (i.e. with start time and end time), or an open time window (i.e. with only start time or only end time) with corresponding adaptations.

The event may cover an entire associated path or only a part of a path. Where an event covers only a part of a path, it may be specified with start position and end position that are geographically located on the path (this is typically the case of a traffic jam that affect a certain road section). The event may also have an areal extent. The covered sections of the path may then be derived from the intersections between the path and the event area. Events in the form of weather conditions might be covering a certain area.

The event score may correspond to severity, such as the percentage of normal speed of vehicle moving due to traffic jam, or the severity of the weather conditions for the purpose of safe and efficient driving (scaled by fog, rain, storm, snow, hail, etc.).

Paths data may be receiving from external source in response to providing the external source with location coordinates, such as via an Application Programming Interface (API). Paths data may also be determined based on a map, such as a digital and/or vectored map indicating roads. The map may at least be large enough to cover locations to be visited. The paths data should preferably include several paths between each set of two locations (alternative paths between locations). The alternative paths should be paths that preferably do not overlap, or overlap only to the extent necessary (if there is only one road to leave or enter a location). This increases the likelihood that events can be avoided if desired.

Although the events are exemplified as something to avoid, it may just as well be events that are desirable. For example, events of good weather may be desirable or event required (such as when driving motorcycle). Location events may also be something to avoid (such as too busy hours of the postal service) or something that are wanted. The implementation substantially the same as preventing events above a score is equal to requiring events at or above the score.

In one embodiment the method further comprises:

e) receiving a route initiation time and/or route completion time; and

wherein the linear constraints include a restriction specifying that the route is planned so that a route start time is selected on or after the route initiation time and/or a route end time is before or on the route completion time.

In one embodiment, determining the route plan includes applying a branch and bound method to find the optimal route plan based on the optimization objective and the linear constraints.

The advantage of using the branch and bound method to solving the optimization objective taking the linear constraints into consideration, is that an optimal solution is provided at reasonable time. Alternatively, an exhaustive search may be used (less efficient). Any other suitable method may be used.

In one embodiment, determining the route plan is based on event score and event time window associated with the plurality of paths.

In one embodiment, the optimization objective includes maximizing the function

$$\sum_{i \in G} z_i - \lambda_1 * \sum_{i \in G} \sum_{j \in G} \sum_{k \in K} e_{i,j,k} * w_{i,j,k} - \lambda_2 * \left( \sum_{j \in G} \sum_{k \in K} \{ t_{j,N,k} + e_{j,N,k} * (c_{j,N,k} + s_j) \} - \sum_{i \in G} \sum_{k \in K} t_{0,i,k} \right)$$

where

$G = \{0, 1 ... N\}$ denotes a set of location identifiers;

$k \in K$ denotes paths between locations;

$z_i$ denotes binary variables that are set to true only if location i is visited;

$\lambda_1$ and $\lambda_2$ denotes hyperparameters for selecting the relative importance;

$e_{i,j,k}$ denotes binary variable that are set to true only if path k between location i and j is selected;

$w_{i,j,k}$ denotes event score on path k between location i and j;

$t_{j,N,k}$ denotes start time at location j, if $e_{j,N,k}$ is true, 0 otherwise;

$c_{j,N,k}$ denotes travel time between location j and location N via path k;

$s_j$ denotes stay duration at location j.

The advantage of maximizing this objective function is that a trade-off may be made between the preference to visit all location (first part of the function), driving in good weather conditions (second part of the function), and to complete the route as fast as possible (the last part of the function). By modifying the hyperparameters, the advantage is further that the trade-off between the parts can be adjusted according to circumstances.

In one embodiment, the linear constraints include at least one event constraints, the event constraints defining that the solution to the optimization objective exclude paths associated with events, where the paths are planned within the event time window of the respective event and where the event score is above a pre-defined adverse event score.

In one embodiment, the linear constraints include the inequality restriction:

$$\left( t_{i,j,k} + e_{i,j,k} * (s_i + ca_{i,j,k}) > p_{i,j,k} \quad \text{or} \quad t_{i,j,k} + e_{i,j,k} * (s_i + cb_{i,j,k}) < r_{i,j,k} \right)$$

where

$t_{i,j,k}$ denotes start time at location i, if $e_{i,j,k}$ is true, 0 otherwise;

$e_{i,j,k}$ denotes binary variable that are set to true only if path k between location i and j is selected;

$s_i$ denotes stay duration at location i;

$ca_{i,j,k}$ denotes travel time from location i to start location of adverse event along path k from location i to location j;

$cb_{i,j,k}$ denotes travel time from location i to end location of adverse event along path k from location i to location j;

$r_{i,j,k}$ and $p_{i,j,k}$ denotes event time window start and end respectively.

The "or" between the two inequalities above mean that satisfying any of the inequalities satisfies the inequality restriction (i.e. either the path is planned before the start time of the event, or the path is planned after the end of the event). The event window may also only have a start time, or only an end time. In this case only the right/left inequality will be used for the restriction. Alternatively the start time may be set to zero or negative eternity and the end time set to positive eternity, respectively.

The travel time from a location to the start and end of an event along a path, respectively, may be received from externa source, or may be calculated based on distance and driving speeds and/or from a digitalized map representing roads between locations and event start/end positions.

In one embodiment, the event data models forecasted weather, the corresponding event score quantifies weather severity, and the corresponding event time window identifies weather time window of the weather severity; wherein the optimization objective include preferring good weather conditions and/or the linear constraints include preventing weather conditions above a pre-defined severity.

By including the severity of the forecasted weather along a route as a weather severity score, the optimization problem may include preferring driving routes in good weather and preventing routes during the worst weather conditions. Preferring good weather conditions and abstaining from divining in the worst weather conditions increase the safety of vehicle transportation as it is known that adverse weather conditions increase the risk of traffic and transportation accidents. Excluding paths that are associated with severe weather may also prolong the life time of a vehicle and improve fuel efficiency as bad weather tend to result in prolonged driving time.

Autonomous driving in adverse weather condition is more challenging and the invention may be used to restrict autonomous driving to weather conditions considered safe for autonomous driving.

In one embodiment, the event data is identifying at least one event associated with at least one of the locations;

wherein the event time window indicates opening hours of the location, and the linear constraints includes a restriction that the at least one location must be visited during opening hours of the at least one location and/or

wherein the event score indicates how crowded the location is and the event time window indicates the time window of the event score (the duration of densely visited), and the linear constraints includes a restriction that the at least one location must be visited based on how crowded the location is during the visited time.

In one embodiment, the event data is identifying at least one event associated with at least one of the locations; and

wherein the optimization objective includes a preference to visit the location when the location is less crowded.

In one embodiment, the linear constraints include the inequality

$$o_u * e_{u,i,k} \leq t_{u,i,k} \leq f_u * e_{u,i,k} \ \forall i \in G, k \in K$$

$$\sum_{j \in G} \sum_{k \in K} \left( t_{j,u,k} + \left( s_j + c_{j,u,k} \right) * e_{j,u,k} \right) \leq \sum_{i \in G} \sum_{k \in K} t_{u,i,k}$$

where

$o_u$ denotes opening time for location u;
$f_u$ denotes closing time for location u; if location u have no time window constrain, $o_u = 0$, $f_u = \infty$;
$e_{j,u,k}$ denotes binary variable that are set to true only if path k between location j and u is selected;
$t_{j,u,k}$ denotes start time at location j, if $e_{j,u,k}$ is true, 0 otherwise;
$s_j$ denotes stay duration at location j;
$c_{j,u,k}$ denotes travel time from location j to location u via path k.

The invention involves realizing that events may also be associate with locations, so that the route plan generated for visiting several locations is adjusted so that as many locations as possible are visited while still visiting the locations during the opening hours of the locations.

Where the event indicates how crowded the location is, the invention may improve efficiency of the route by adjusting the route plan so that the locations are visited at a time when the locations are less crowded. This may lead to shorter stops and more efficient utilization of resources, such as the vehicle used for transportation.

In one embodiment, the route plan is updated in response to a change in the event data. The advantage is that that event forecast may change. Typically, the reliability of a forecast of an event increases the closer in time the event takes place. By polling or by receiving pushed messages with event updates, the route plan may be optimized according to event forecast update. The route may be updated only on constraints (to make sure e.g. severe weather is excluded), or also on optimization object (to find a more optimal route based on event updates).

The object of the present invention is also solved by a computer readable medium comprising instructions, when executed by a computer, cause the computer to carry out the above described method.

The object of the present invention is also solved by a route planning communication system comprising:

a route planning device 100;
a paths data server 160; and
an event data server 170;
wherein the a route planning device 100 comprises a processor and an input device 350;
wherein the processor is adapted to carry out the method of one of the claim 1 to 12;
wherein the locations data is retrieved via an input device 350;
wherein the paths data is received from the paths data server 160 based on a request to visit the locations; and
wherein the event data is received from the event data server 170 based on a request to visit a geographical area of the locations and/or based on the paths received from the paths data server 160.

The invention enables users, either driving vehicle, or riding an autonomous vehicle, to have possibility to find the optimal route taking the forecasted weather, such as predictive micro-weather, into account (e.g. foggy during 5-6pm for a given road segment along the route). This may also enable optimal route planning, such as suggesting right departure time and right route to drive, and update the route plan dynamically in response to change in current states and/or in response to change in forecasts of predicted future states. This optimal planning can further extend to other precise predictive events for multiple routes and multiple destinations.

The benefits and advantages of the aforementioned storage medium are equal or similar to the advantages of the above-mentioned method.

In the following, embodiments of the invention are described with respect to the figures, wherein

Fig. 1    schematic illustrates geographical locations and events along paths between locations
Fig. 2    steps of method according to one embodiment of the invention
Fig. 3    schematic diagram of route planning device
Fig. 4    schematic diagram of data communication system
Fig. 5    example of event data structure

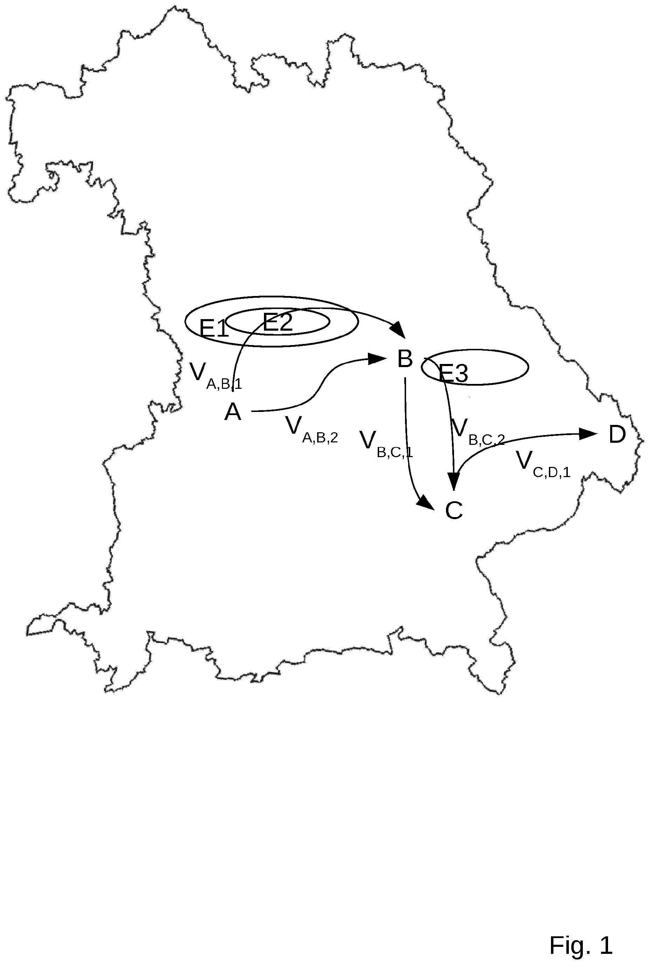

Fig. 1 shows visiting locations (A,B,C,D) for the route planning. The locations may be entered by a user that desire to visit the locations during a tour. Fig. 1 also shows paths ($V_{A,B,1}$, $V_{A,B,2}$, $V_{B,C,1}$, $V_{B,C,2}$, $V_{C,D,1}$) between the locations (A,B,C,D). Also shown are events (E1, E2, E3) along two of the paths (E1 and E2 along $V_{A,B,1}$ and E3 along $V_{B,C,2}$). Each event may have score (not shown) and may have a time window (not shown). Each location (A,B,C,D) may further have opening hours (not shown) and may have score (not shown).

Locations A, B, C, and D may exemplary represent cities such as Munich, Nurnberg, Regensburg, and Augsburg, or destinations within a city such as the user's home, a shopping mall, a restaurant, and a museum. Naturally, the method of the invention can apply to any number of locations, preferably two or more than two.

Event E2 is pictured in Fig. 1 as located within the outer borders of event E1. The event E1 may indicate moderate rain, while event E2 may indicate heavy rain. The event area E1 may be implemented as covering the area of moderate rain or worse, in which case the area of E2, is also part of the area of E1. This implementation may improve efficiency, since only one event (E1) needs to be used to exclude both moderate and heavy rain. Alternatively, E1 is only the area of moderate rain and the area with heavy rain score (E2). The area of E2 is then excluded from the area of E1. This implementation may be less efficient, since two events (both event E1 and event E2) must be used to exclude both moderate and heavy rain.

The generation of a route plan to visit the locations may involve solving am optimization objective with linear constraints. In the following, notations are specified for the formulation of the optimization objectives and the linear constraints.

The locations are denoted as $G = \{0,1 \cdots N\}$, 0 representing the start location, $N$ is the final destination where it can be the same as the start location; $1 \cdots N - 1$ are index for the locations user plans to visit. For location $i$, time window $[o_i, f_i]$ and stay duration $s_i$ is defined, $o_i$ means the earliest opening time, $f_i$ means the last serving time, if location have no time window constrain, $o_i = 0$, $f_i = \infty$.

The path between locations are denoted as $V = \{v_{i,j,k}, i,j \in G, k \in K\}$, $v_{i,j,k}$ means the $k$th route from location $i$ to $j$, let $d_{i,j,k}, c_{i,j,k}, w_{i,j,k}$ means travel distance, travel time and normalized weather quality score for $v_{i,j,k}$; if weather forecast predicts adverse weather for a given path, $[r_{i,j,k}, p_{i,j,k}]$ means the time windows of adverse weather from the start to the

end, $[\dot{v}_{i,j,k}, \ddot{v}_{i,jk}]$ means the start and end location of interval in $v_{i,j,k}$ that will be affected by adverse weather, $ca_{ij,k}$ means travel time from $i$ to $\dot{v}_{i,j,k}$, $cb_{ij,k}$ means travel time from $i$ to $\ddot{v}_{i,j,k}$. Higher weather score means worse weather condition.

The map shown in Fig. 1 is provided as an example only. The invention may be used in any scale of travel, such as between destinations within a city, or between cities.

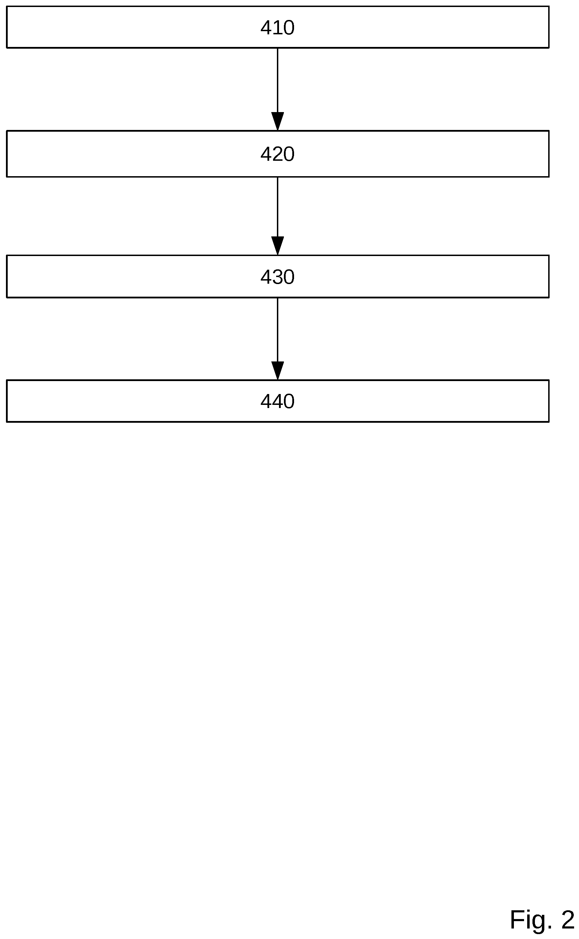

Fig. 2 shows steps of a method according to the present invention. The method includes a step of receiving locations data 410, a step of receiving and/or determining paths data 420, a step of receiving event data 430, and a step of determining the route 440;

The method may further include a step of receiving route initiation time and/or route completion time (optional and not shown) and a step of displaying route plan and/or route start time (optional and not shown). After the route plan has been established, the method may involve initiating driving directions according to the route plan and/or initiate autonomous driving according to the route plan.

The objective may include finding start time $t_o$ and optimal route plan that enable user to visit destination during their opening hours, avoid adverse weather condition for safety, and drive efficiently. Due to the constraint from weather condition and time availability for each of the destinations, some destination might be skipped.

The problem may be formulated as a mixed integer linear programming (MILP) problem. The following variables may be defined.

Binary variable $e_{i,j,k}$ for every path $v_{i,j,k}$; $e_{i,j,k} = 1$ means $v_{i,j,k}$ is included in the final route.

$$t_{i,j,k} = \begin{cases} visit\ start\ time\ at\ location\ i, & if\ e_{i,j,k} = 1 \\ 0, & otherwise \end{cases},$$

Time variable it is obviously that for location i, the visit time start at: $t_i = \sum_j \sum_k t_{i,j,k}$

Binary variable $z_i$ for any location $i$; $z_i = 1$ means location i is visited in the final route. It is obviously, $z_0 = 1$, $z_N = 1$ where home is the final destination.

The optimization objective may be formulated to: 1) visit user's target location, 2) drive in a good weather condition, 3) drive fast, 4) visit location during the opening time, 5) avoid the worst weather condition. 1), 2), and 3) can be modelled in optimization objective, and 4) and 5) are modelled as the linear constrains

The optimization objective could be expressed as maximizing the following function:

$$\sum_{i \in G} z_i - \lambda_1 * \sum_{i \in G} \sum_{j \in G} \sum_k e_{i,j,k} * w_{i,j,k} - \lambda_2 * \left( \sum_{j \in G} \sum_{k \in K} \{t_{j,N,k} + e_{j,N,k} * (c_{j,N,k} + s_j)\} - \sum_{i \in G} \sum_k t_{0,i,k} \right)$$

$\sum_{j \in G} \sum_{k \in K} \{t_{j,N,k} + e_{j,N,k} * (c_{j,N,k} + s_j)\}$ is arriving time at destination. For any valid route, destination have one preceding location and reached from one path, so only one $e_{j^*,N,k^*} = 1$ among all $j,k$, all other $e_{j,N,k}$ and $t_{j,N,k}$ equal to 0, $\sum_{j \in G} \sum_{k \in K} \{t_{j,N,k} + e_{j,N,k} * (c_{j,N,k} + s_j)\} = t_{j^*,N,k^*} + c_{j^*,N,k^*} + s_{j^*}$ which is the arriving time at destination N.

Similarly, $\sum_{i \in G} \sum_{k \in K} t_{0,ik}$ is the route start time. The last part of objective function means total time cost for the whole route. $\lambda_1$ and $\lambda_2$ are hyperparameters to control the importance of each part.

Examples of $\lambda 1$ and $\lambda 2$ include:

$$\lambda_1 = 1 \text{ and } \lambda_2 = \frac{1}{\max_{i,j,k}(c_{i,j,k} + s_i)}$$

The linear constrain for the problem may include:
For any location u: $0 < u < N$,

$$\sum_{i \in G} \sum_{k \in K} e_{i,u,k} = \sum_{j \in G} \sum_{k \in K} e_{u,j,k} = z_u \qquad (1)$$

The constrain ensure that if location u is visited ($z_u = 1$), it can be arrived at exactly once, departure to other location exactly once; if u is not visited ($z_u = 0$), any path related to it will be skipped.

$$\sum_{i \in G} \sum_{k \in K} e_{0,i,k} = 1 \text{ and } \sum_{j \in G} \sum_{k \in K} e_{j,N,k} = 1 \qquad (2)$$

The constrain ensures that route starts from 0 and ends at *N*.

For any location u: $0 < u < N$, the time window related constrain are:

$$o_u * e_{u,i,k} \leq t_{u,i,k} \leq f_u * e_{u,i,k} \ \forall i \in G, k \in K \tag{3}$$

$$\sum_{j \in G} \sum_{k \in K} (t_{j,u,k} + (s_j + c_{j,u,k}) * e_{j,u,k}) \leq \sum_{i \in G} \sum_{k \in K} t_{u,i,k} \tag{4}$$

Inequality (3) is the time window constrain.

Left side of (4) is the time reaching *u*, the right side of (4) is service start time in *u*, it is obviously that user must reach *u* before service start. If *u* is not visited, each side of (4) is 0, the constrain still holds.

For any path $v_{i,j,k}$ that has adverse weather during time window $[r_{i,j,k}, p_{i,j,k}]$, the travel time in interval that will be affected by adverse time window is from $t_{i,j,k} + e_{i,j,k} * (s_i + ca_{i,j,k})$ to $t_{i,j,k} + e_{i,j,k} * (s_i + cb_{i,j,k})$. To avoid the worst weather condition, the constraint could be expressed as:

$$t_{i,j,k} + e_{i,j,k} * (s_i + ca_{i,j,k}) > p_{i,j,k} \quad \text{or} \quad t_{i,j,k} + e_{i,j,k} * (s_i + cb_{i,j,k}) < r_{i,j,k} \tag{5}$$

If $v_{i,j,k}$ is not in the final route, then $t_{i,j,k}$ and $e_{i,j,k}$ is zero, the second part of (5) is always true, so (5) is true; if $v_{i,j,k}$ is in the final route, it easy to verify that (5) is the necessary and sufficient condition that driving time in adverse weather affected area have no overlap with the time bad weather happened.

However, OR operator is invalid in MILP, it can be transformed into linear constrain by introducing new binary variable $y_{i,j,k}$, (5) could be rewritten as valid MILP linear constrain:

$$\begin{cases} t_{i,j,k} + e_{i,j,k} * (s_i + ca_{i,j,k}) - p_{i,j,k} > -M * y_{i,j,k} \\ r_{i,j,k} - t_{i,j,k} - e_{i,j,k} * (s_i + cb_{i,j,k}) > -M * (1 - y_{i,j,k}) \end{cases} \tag{6}$$

*M* is a big enough constant, it could be set to $\max(\max_{i,j,k} p_{i,j,k}, (t_{last} - r_{i,j,k}))$, is the last time to reach destination, if $t_{last}$ is not defined, $t_{last}$=23:59

If in one path, multiple area may suffered from adverse weather, for each area, similar constrain as (6) could be build.

Other condition could also be implemented, for example, if user wish to reach destination before $t_{last}$, the constraint includes:

$$\sum_{j \in G} \sum_{k \in K} \{t_{j,N,k} + e_{j,N,k} * (s_j + c_{j,N,k})\} \leq t_{last} \tag{7}$$

Available MILP library or solutions techniques are used to find the optimized values of $e_{i,j,k}, t_{i,j,k}, z_i$ according to constrain (1)-(4),(6),(7) and objective function.

The optimized start time is : $\dot{t}_o = \sum_{i \in G} \sum_{k \in K} t_{o,i,k}$

The optimized route could be got using the following steps:

Set $\dot{x}_0 = 0$, which means route start at start location.

While If $\dot{x}_{i+1} < N$, repeat:

Find $j_i^*$, $k_i^*$ that $e_{\dot{x}_i, j_i^*, k_i^*} = 1.$ Then the next location $\dot{x}_{i+1} = j_i^*$, the path to next location is $v_{\dot{x}_i, j_i^*, k_i^*}$.

The optimized route determined as:

$$0 \xrightarrow{v_{0,\dot{x}_1,k_0^*}} \dot{x}_1 \xrightarrow{v_{\dot{x}_1,\dot{x}_2,k_1^*}} \dot{x}_2 \to \cdots \xrightarrow{v_{\dot{x}_l,N,k_l^*}} N$$

Upon event update (such as HD micro-weather forecast change), the impacted request can be recognized from a centrally located, indexed database. There are several options to update the optimal result for the impacted request. One solution is to rerun the optimization method. Alternatively, a validation can be made only on the constraints and only if the constraints are not valid, rerun or adapt the optimization result. The user may be notified when the route has changed.

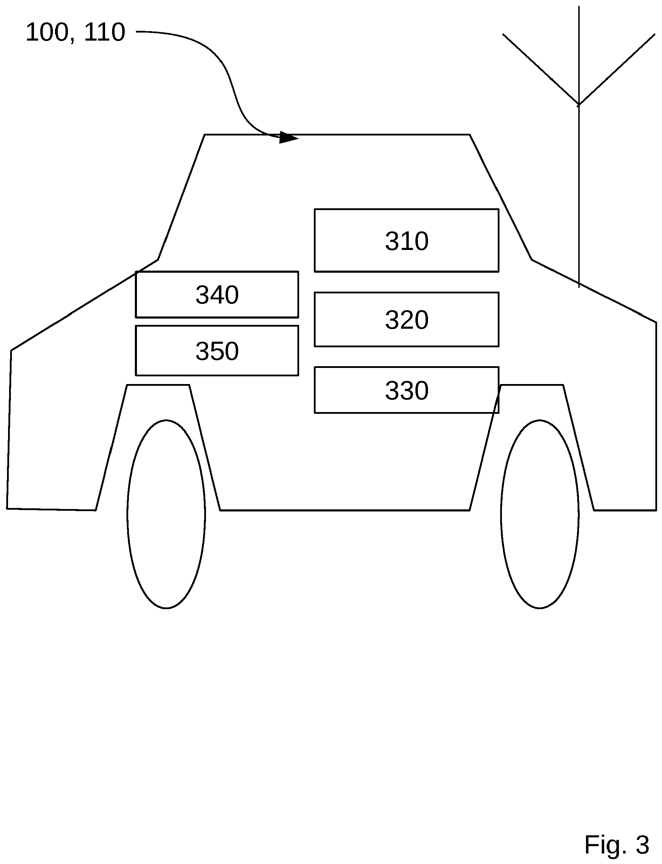

Fig. 3 shows a schematic diagram of a vehicle as a route planning device, with route planning capabilities according to the present invention. The vehicle has a communication module 310 (such as a wireless communication device), a processor 320, a memory 330 to store execution instructions and/or data, a display device 340, and an input device 350.

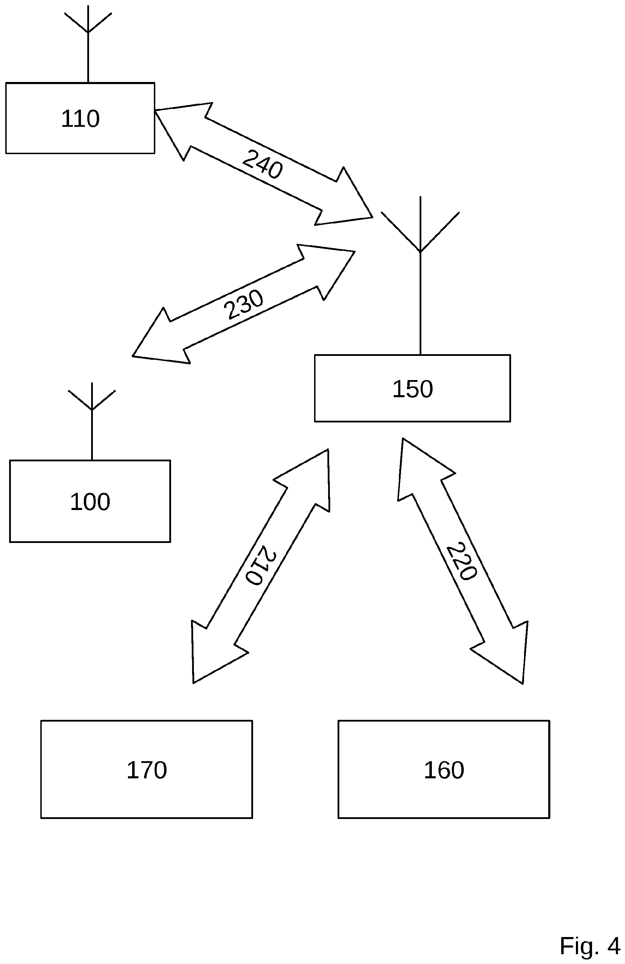

Fig. 4 shows a schematic diagram of a communication system for allowing a vehicle 100 to receive paths data and event data according to the present invention. The communication system includes a communication router 150, a paths data server 160, an event data server 170, and communication channels 210, 220, 230, and 240.

A user and/or driver may enter locations/destinations to visit using input device 350. Based on the destinations, the processor communicates using the wireless communication module 310 and communication router 150 with paths data server 160 to receive paths between the destinations and with event data server 170 to receive events affecting the received paths. The paths data server 160, or a separate data server (not shown) may provide opening hours for the locations. The event data server may also provide event time window and event score. Based on the received paths data and received event data, the processor executes instructions according to the present invention to provide an optimized route for visiting the entered location taking constraints and event into account. Preferences and/or constraints for paths and/or locations may alternatively or additionally be entered via the input device.

The invention method may also be carried out remotely from a vehicle, such as via an application programming interface (API), and the result communicated to the vehicle as a proposal for a route plan. The method may also be executed on a stationary computer and/or server for route planning, and if needed uploaded to the vehicle for providing driving directions. The invention may also be carried out on a central location, such as on communication router 150.. The event data server 170 and the paths data server 160 may be located on different or the same server.

The communication may be carried out over any network and preferably using established mobile and/or wireless networks for communicating with vehicles and preferable over the Internet for communicating with the event data server 170 and the paths data server 160.

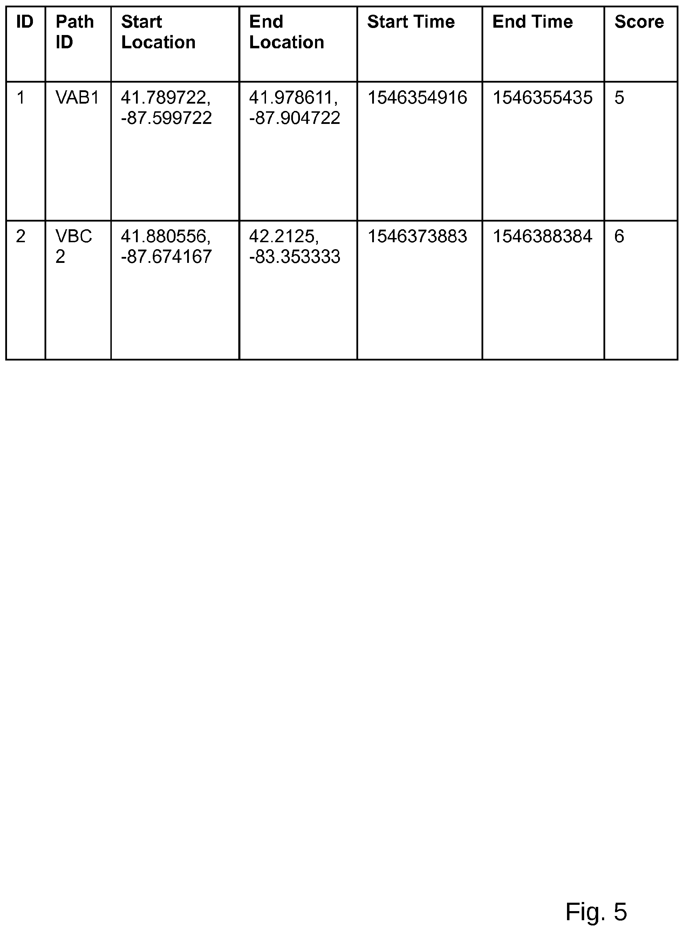

Fig. 5 shows an example of the structure of event data records according to the invention. Each event record in the event data may include an "ID" field identifying the event, a "Path ID" field identifying the associated path, a "Start Location" field specifying a geographical location on the associated path where the event begins, an "End Location" field specifying a location on the associated path where the event ends, a "Start Time" and "End Time" specifying the event time window, and a "Score" field specifying the event score, such as the event severity. In case the event is forecasted to evolve over time, such as moving and/or changing score, several records may be used model the evolution of the event.

Reference numerals

| | |
|---|---|
| A,B,C,D | Geographical locations |
| E1, E2 | Adverse event |
| $V_{A,B,1}$, $V_{A,B,2}$, $V_{B,C,1}$, $V_{B,C,2}$, $V_{C,D,1}$ | Paths between locations |
| 150 | communication router |
| 160 | paths data server |
| 170 | event data server |
| 210,220,230,240 | communication channels |
| 310 | communication module |
| 320 | processor |
| 330 | memory |
| 340 | display device |
| 350 | input device |
| 410 | step of receiving locations data |
| 420 | step of receiving and/or determining paths data, |
| 430 | step of receiving event data |
| 440 | step of determining the route |

**Claims**

1. Computer-implemented method for determining a route plan, the method comprising:

   a) receiving locations data, the locations data identifying a plurality of geographical locations (A, B, C, D);

b) receiving and/or determining paths data, the paths data identifying a plurality of paths ($V_{A,B,1}$, $V_{A,B,2}$, $V_{B,C,1}$, $V_{B,C,2}$, $V_{C,D,1}$) between the geographical locations (A, B, C, D);

c) receiving event data, the event data identifying at least one event (E1, E2, E3) associated with at least one of the paths, each event having an event time window and an event score;

d) determining the route plan by selecting paths from the path data as selected paths and by selecting a selected paths order specifying the order in which the selected paths are followed;

**characterized in that**
the step of determining the route plan includes solving an optimization objective with linear constraints; and wherein the optimization objective and/or the linear constraints include at least one event time window and/or at least one event score.

2. The method of claim 1,
wherein the method further comprises:
e) receiving a route initiation time and/or route completion time; and
wherein the linear constraints include a restriction specifying that the route is planned so that a route start time is selected on or after the route initiation time and/or a route end time is before or on the route completion time.

3. The method of any of the previous claims,
wherein determining the route plan includes applying a branch and bound method to find the route plan based on the optimization objective and the linear constraints.

4. The method of any of the previous claims,
wherein determining the route plan is based on event score and event time window associated with the plurality of paths.

5. The method of any of the previous claims,
wherein the optimization objective includes maximizing the function

$$\sum_{i \in G} z_i - \lambda_1 * \sum_{i \in G} \sum_{j \in G} \sum_{k \in K} e_{i,j,k} * w_{i,j,k} - \lambda_2 * (\sum_{j \in G} \sum_{k \in K} \{t_{j,N,k} + e_{j,N,k} * (c_{j,N,k} + s_j)\} - \sum_{i \in G} \sum_{k \in K} t_{0,i,k})$$

where

$G=\{0,1 \cdots N\}$ denotes a set of location identifiers;
$k \in K$ denotes paths between locations;
$z_i$ denotes binary variables that are set to true only if location i is visited;
$\lambda_1$ and $\lambda_2$ denotes hyperparameters for selecting the relative importance;
$e_{i,j,k}$ denotes binary variable that are set to true only if path k between location i and j is selected;
$w_{i,j,k}$ denotes event score on path k between location i and j;
$t_{j,N,k}$ denotes start time at location j, if $e_{j,N,k}$ is true, 0 otherwise;
$c_{j,N,k}$ denotes travel time between location j and location N via path k;
$s_j$ denotes stay duration at location j.

6. The method of any of the previous claims,
wherein the linear constraints include at least one event constraints, the event constraints defining that the solution to the optimization objective exclude paths associated with events, where the paths are planned within the event time window of the respective event and where the event score is above a pre-defined adverse event score.

7. The method of any of the previous claims,
wherein the linear constraints include the inequality restriction:

$$( \ t_{i,j,k} + e_{i,j,k} * (s_i + ca_{i,j,k}) > p_{i,j,k} \quad \text{or} \quad t_{i,j,k} + e_{i,j,k} * (s_i + cb_{i,j,k}) < r_{i,j,k} \ )$$

where

$t_{i,j,k}$ denotes start time at location i, if $e_{i,j,k}$ is true, 0 otherwise;

$e_{i,j,k}$ denotes binary variable that are set to true only if path k between location i and j is selected;

$s_i$ denotes stay duration at location i;

$ca_{i,j,k}$ denotes travel time from location i to start location of adverse event along path k from location i to location j;

$c_{bi,j,k}$ denotes travel time from location i to end location of adverse event along path k from location i to location j;

$r_{i,j,k}$ and $p_{i,j,k}$ denotes event time window start and end respectively.

8. The method of any of the previous claims,
   wherein the event data models forecasted weather, the corresponding event score quantifies weather severity, and the corresponding event time window identifies weather time window of the weather severity;
   wherein the optimization objective include preferring good weather conditions and/or the linear constraints include preventing weather conditions above a pre-defined severity.

9. The method of any of the previous claims,
   wherein the event data is identifying at least one event associated with at least one of the geographical locations;
   wherein the event time window indicates opening hours of the geographical location, and the linear constraints includes a restriction that the at least one geographical location must be visited during opening hours of the at least one geographical location and/or
   wherein the event score indicates how crowded the geographical location is and the event time window indicates the time window of the event score, and the linear constraints includes a restriction that the at least one geographical location must be visited based on how crowded the geographical location is during the visited time.

10. The method of any of the previous claims,
    wherein the event data is identifying at least one event associated with at least one of the geographical locations; and
    wherein the optimization objective includes a preference to visit the geographical location when the geographical location is less crowded.

11. The method of any of the previous claims,
    wherein the linear constraints include the inequality

$$o_u * e_{u,i,k} \leq t_{u,i,k} \leq f_u * e_{u,i,k} \ \forall i \in G, k \in K$$

$$\sum_{j \in G} \sum_{k \in K} (t_{j,u,k} + (s_j + c_{j,u,k}) * e_{j,u,k}) \leq \sum_{i \in G} \sum_{k \in K} t_{u,i,k}$$

where

$o_u$ denotes opening time for geographical location u;

$f_u$ denotes closing time for location u; if location u have no time window constrain, $o_u = 0$, $f_u = \infty$;

$e_{j,u,k}$ denotes binary variable that are set to true only if path k between location j and u is selected;

$t_{j,u,k}$ denotes start time at location j, if $e_{j,u,k}$ is true, 0 otherwise;

$s_j$ denotes stay duration at location j;

$c_{j,u,k}$ denotes travel time from location j to location u via path k.

12. The method of any of the previous claims,
    wherein the route plan is updated in response to a change in the event data.

13. Computer readable medium comprising instructions, when executed by a computer, cause the computer to carry out the method of one of the previous claims.

14. Route planning communication system comprising:

    a route planning device (100);
    a paths data server (160); and
    an event data server (170);

wherein the a route planning device (100) comprises a processor and an input device (350);
wherein the processor is adapted to carry out the method of one of the claim 1 to 12;
wherein the locations data is retrieved via an input device (350);
wherein the paths data is received from the paths data server (160) based on a request to visit the locations; and
wherein the event data is received from the event data server (170) based on a request to visit a geographical area of the locations and/or based on the paths received from the paths data server (160).

Fig. 1

```
┌─────────────────────────────────────────────┐
│                    410                       │
└─────────────────────────────────────────────┘
                      │
                      ▼
┌─────────────────────────────────────────────┐
│                    420                       │
└─────────────────────────────────────────────┘
                      │
                      ▼
┌─────────────────────────────────────────────┐
│                    430                       │
└─────────────────────────────────────────────┘
                      │
                      ▼
┌─────────────────────────────────────────────┐
│                    440                       │
└─────────────────────────────────────────────┘
```

Fig. 2

100, 110

310

340

350

320

330

Fig. 3

Fig. 4

| ID | Path ID | Start Location | End Location | Start Time | End Time | Score |
|----|---------|----------------|--------------|------------|----------|-------|
| 1 | VAB1 | 41.789722, -87.599722 | 41.978611, -87.904722 | 1546354916 | 1546355435 | 5 |
| 2 | VBC 2 | 41.880556, -87.674167 | 42.2125, -83.353333 | 1546373883 | 1546388384 | 6 |

Fig. 5

Europäisches
Patentamt

European
Patent Office

Office européen
des brevets

## EUROPEAN SEARCH REPORT

Application Number

EP 19 15 9969

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/262790 A1 (KHASIS DAN [US]) 14 September 2017 (2017-09-14) * abstract * * paragraph [0012] - paragraph [0024] * * paragraph [0038] - paragraph [0056] * ----- | 1-14 | INV. G06Q10/04 G06Q50/30 |
| X | WO 2017/160276 A1 (FORD GLOBAL TECH LLC [US]) 21 September 2017 (2017-09-21) * abstract * * page 3, line 5 - page 4, line 28 * * page 5, line 15 - line 23 * * page 6, line 15 - page 7, line 21 * * page 8, line 24 - page 11, line 8 * ----- | 1-14 | |

TECHNICAL FIELDS
SEARCHED     (IPC)

G06Q
G01C

The present search report has been drawn up for all claims

| Place of search | Date of completion of the search | Examiner |
|---|---|---|
| Munich | 9 April 2019 | Moltenbrey, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 9969

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2019

| Patent document cited in search report | Publication date | Patent family member(s) | | Publication date |
|---|---|---|---|---|
| US 2017262790 A1 | 14-09-2017 | US | 2017262790 A1 | 14-09-2017 |
| | | US | 2017323249 A1 | 09-11-2017 |
| WO 2017160276 A1 | 21-09-2017 | US | 2019056233 A1 | 21-02-2019 |
| | | WO | 2017160276 A1 | 21-09-2017 |

For more details about this annex : see Official Journal of the European Patent Office, No. 12/82